# EUROPEAN PATENT SPECIFICATION

(11) **EP 2 655 230 B1**
(45) Date of publication and mention of the grant of the patent: **29.06.2016**
(21) Application number: 11819110.5
(22) Date of filing: 15.12.2011
(51) Int. Cl.: B65H 54/28, B65H 55/04, B65H 59/18, B29D 30/00

(54) **METHOD FOR STORING AN ELEMENTARY SEMI-FINISHED ELEMENT IN A PLANT FOR PRODUCING TYRES AND DEVICE THEREFORE**
VERFAHREN ZUR LAGERUNG EINES HALBFERTIGEN GRUNDELEMENTS IN EINER ANLAGE ZUR HERSTELLUNG VON REIFEN UND VORRICHTUNG DAFÜR
PROCÉDÉ POUR STOCKER UN ÉLÉMENT SEMI-FINI ÉLÉMENTAIRE DANS UNE INSTALLATION POUR PRODUIRE DES PNEUS ET DISPOSITIF S'Y RAPPORTANT

(30) Priority: 22.12.2010 IT MI20102351; 20.01.2011 US 201161434605 P
(43) Date of publication of application: 30.10.2013
(73) Proprietor: Pirelli Tyre S.p.A., 20126 Milano (IT)
(72) Inventor: AMURRI, Cesare Emanuele, I-20126 Milan (IT); MARCHINI, Maurizio, I-20126 Milan (IT)
(74) Representative: Lasca, Sergio
(86) International application number: PCT/IB2011/055699
(87) International publication number: WO 2012/085776

(56) References cited:
- EP-A2- 0 649 807
- FR-A1- 2 884 238
- US-A- 4 170 504
- US-A- 4 352 467
- US-A1- 2009 320 989

## Description

The present invention relates to a method and a device for the storing of an elementary semifinished product on collection supports, in association with a service film, in a tyre building plant. The production cycles of a tyre contemplate that, subsequently to a building process in which the different tyre components are manufactured and/or assembled in one or more building lines, a vulcanisation and moulding process is carried out which is adapted to define the tyre structure according to a desired geometry and tread pattern.

A tyre generally comprises a torically ring-shaped carcass, including one or more carcass plies, reinforced with reinforcing cords lying in substantially radial planes (the radial plane contains the tyre rotation axis). Each carcass ply has its ends integrally associated with at least one annular reinforcing structure made of metal and referred to as "bead core", which constitutes the reinforcing element of the beads, i.e. of the radially internal ends of the tyre, the function of which is to enable assembly of the tyre to a corresponding mounting rim. A band of elastomeric material, referred to as "tread band" is placed crown-wise to said carcass and formed in it is a raised pattern for ground contact, at the end of the vulcanisation and moulding steps. A reinforcing structure generally known as belt structure or "breaker" is interposed between the carcass and tread band. This breaker usually comprises, in case of car tyres, at least two radially superposed strips of rubberised film provided with reinforcing cords, usually of metal, disposed parallel to each other in each strip and crossed with the cords of the adjacent strip, preferably symmetrically relative to the equatorial tyre plane. Preferably the belt structure, at a radially external position, at least on the ends of the underlying belt strips, also comprises a third layer of textile or metallic cords, that are disposed circumferentially (at 0 degrees).

Finally, in tyres of the tubeless type there is a radially internal layer, referred to as liner, which has impermeability features for ensuring air-tightness to the tyre.

Within the present specification and the following claims, by the term "elastomeric material" it is intended a composition comprising at least one elastomeric polymer and at least one reinforcing filler. Preferably, this composition further comprises additives such as cross-linking agents and/or plasticizers. Due to the presence of the cross-linking agents, this material can be cross-linked by heating, so as to form the final article of manufacture.

In the following of the present specification and in the following claims the term "elongated element", when not differently specified, is understood as indicating an element of elastomeric material having a major extension along a longitudinal direction thereof. This elongated element can comprise textile or metallic reinforcing cords embedded in a matrix of elastomeric material.

In the present specification and in the following claims, the expression "elementary semifinished elements" means continuous elongated elements of elastomeric material internally having at least one textile or metallic reinforcing cord and/or strips of elastomeric material generally referred to as "strip-like elements", obtained by cutting said continuous elongated elements to size.

Generally these elementary semifinished elements are deposited in mutual side by side relationship on a substantially cylindrical and/or substantially toroidal deposition surface, for example contributing in forming carcass plies, belt strips and some types of reinforcing elements.

In the present specification and in the following claims, by "differentiated production" of a plant it is intended the possibility of using, in the production of each tyre, elementary semifinished elements that are different in size and/or type of elastomeric material and/or type of textile or metallic reinforcing cord.

In the following of the present invention by the expression "nominal diameter" of a storing device it is intended the outer diameter of the winding core of this device, i.e. related to the deposition surface of an element measured before winding of the element itself.

WO 09/040594 in the name of the same Applicant, shows a plant and a process for tyre production in which different independent production units are suitably integrated and synchronised with each other in order to form different tyre types and sizes. The process described in this document, contemplates use of elementary semifinished elements that are different for each tyre to be produced, and are supplied from feeding units operatively associated with the work stations.

GB 882,503 discloses an apparatus for simultaneous winding of an elongated element and a service film on a storing device. The elongated element comprises reinforcing cords embedded in a matrix of elastomeric material. This elongated element is used for making carcass plies for tyre production. The apparatus comprises a device for feeding the elongated element to the storing device and a device for feeding the service film to said storing device. Rotation of the storing device causes simultaneous winding, on the device itself, of the elongated element and the service film. The service film, in particular, will be interposed between the superposed coils of the elongated element.

EP 0 649 807 discloses a method and an apparatus for winding a ribbon-like element that is used for producing tyres, such as a rubberised sheet containing reinforcing threads/wires or cords or a nylon strip.

US 4 170 504 relates to a method for preparing a spool with enhanced capacity for narrow strip components for use in building tires. The document also discloses a method of supplying a strip to a tire building machine from a supply reel.

FR 2 884 238 faces to provide a process for winding a strip on a reel. The method involves winding a sheet product from an edge of a spool in a manner parallel to the edge and over a turn. The product is successively wound along a variable angle in a determined zone (A), along a constant angle in a determined zone (B) and along a variable angle in a determined zone (C) until a winding parallel to another edge of the spool is obtained. A successive winding operation is restarted from the edge to obtain a complete winding. The documents also disclose a device for implementing a sheet product winding method.

The Applicant has observed that in building plants like those described in WO 09/040594, designed to make tyres having very different technological requirements from each other, it is convenient that an elementary semifinished element should be selected from the different types at the moment of use, without stopping the building process.

In this context, the Applicant believes that it is advantageous to provide the different work stations with the elementary semifinished elements through feeding devices, which elementary semifinished elements have been preferably previously prepared and/or stored and are made available for the intended working with great flexibility.

The Applicant has further ascertained that the storing devices like those described in GB 882,503 involve some drawbacks for use in feeding work stations of the type present in plants for the differentiated production of tyres, due to a limited availability in terms of amounts of the individual elementary semifinished element.

In particular, the Applicant has perceived that it is advantageous to supply the different work stations through a plurality of feeding devices, each characterised by a high ability of storing the individual semifinished element, so as to reduce the plant's inactivity time due to replacement of the feeding devices, thereby increasing productivity of the plant itself.

The Applicant has further observed that, in processes including deposition of the elementary semifinished elements in mutually approached relationship on a deposition surface for making some tyre components, the building cycle time of these components depends on the transverse size of the elementary semifinished element itself.

The Applicant has therefore perceived the necessity to use elementary semifinished elements characterised by a greater transverse size as compared with the transverse size of the elementary semifinished elements used in known processes, so as to further increase the productivity of the above described processes.

In relation to these requirements, the Applicant has sensed the possibility of using feeding devices characterised by greater sizes, both in the radial and in the axial directions, relative to the feeding devices used in processes of the above depicted type.

The Applicant has verified that use of said feeding devices for the storing of elementary semifinished elements with sizes of the above highlighted type wound on the feeding device following the known methods, involves problems of quality apparently ascribable to the bigger sizes of the elementary semifinished elements.

The Applicant has further verified that these problems, although reduced, were not solved in a satisfactory manner also by carrying out control of the tension applied to the elementary semifinished element, before winding it on the storing device.

Therefore the Applicant has felt the necessity to develop a method for control of the storing of elementary semifinished elements, as well as a storing and feeding device that, upon application in a plant for differentiated production of tyres, enables control of the winding of the elementary semifinished element on a collection support, in association with a service film, so as to obtain an optimal storing and feeding system of the work stations of the plant and therefore reach an improvement in the quality levels of the tyre and the plant productivity.

The Applicant has therefore found that by adjusting the winding of an elementary semifinished element on a collection support, as a function of particular dimensional parameters of the support and of the elementary semifinished element, it is possible to obtain a uniform winding substantially without residual tensions of the semifinished element.

Accordingly, in a first aspect the present invention refers to a method for controlling the storing of an elementary semifinished element in a plant for the differentiated production of tyres, as defined by claim 1.

The Applicant thinks that, according to this method for control of the storing of an elementary semifinished element, said elementary semifinished element once unwound from the collecting support and made available for the intended working, appears to be substantially devoid of deformation.
Therefore the Applicant believes that it is reduced the risk of generating scraps of material and/or creating faults in the final products in which this elementary semifinished element will be used.

In accordance with a second aspect, the invention relates to a storing and feeding device for an elementary semifinished element for use in a plant for the differentiated production of tyres, as defined by claim 15.

The present invention, in at least one of the aforesaid aspects, can have at least one of the following preferred features, taken individually or in combination with others.

In a preferred embodiment of the present invention, the winding angle θ is defined as a function of at least one dimensional parameter of said at least one collection support and of said elementary semifinished element.

Preferably, the dimensional parameter of said at least one collection support corresponds to the nominal diameter of each collection support.

Preferably, the dimensional parameter of said elementary semifinished element corresponds to a transverse dimension of the elementary semifinished element.

In a preferred embodiment of the present invention, provision is made for:
- reducing the load acting on at least one portion of said elementary semifinished element prior to said depositing of the elementary semifinished element.

A further preferred embodiment of the present invention also comprises:
- providing at least one depositing device for depositing said elementary semifinished element;
- providing at least one feed system for said elementary semifinished element designed to be interlocked with said at least one depositing device in a defined feed direction, said feed system comprising at least one speed compensating device which engages at least one portion of said elementary semifinished element;
- inserting a tension reducing device acting on said speed compensating device.

Preferably, said speed compensating device comprises a plurality of idler rollers.

More preferably, said tension reducing device comprises at least one motor unit designed to drive rotation in the feed direction of the elementary semifinished element.

Preferably, said motor unit is characterised by a constant torque.

In a preferred embodiment, said service film is taken from a storage reel by rotation of said collection support.

More preferably, said service film is designed to be removed from the elementary semifinished element prior to final use of the latter.

Preferably, said service film comprises polyethylene terephthalate or polyester.

In a particularly preferred embodiment, provision is made for assembling at least one component of a tyre, wherein this component is obtained starting from said elementary semifinished element unwound from at least one collection support.

Further features and advantages of the present invention will become more apparent from the following detailed description of some preferred embodiments of a method and a device according to the present invention, taken with reference to the accompanying drawings. In these drawings:
- Fig. 1 is a diagrammatic view of an apparatus for deposition of an elementary semifinished element on a storing device, in accordance with the present invention;

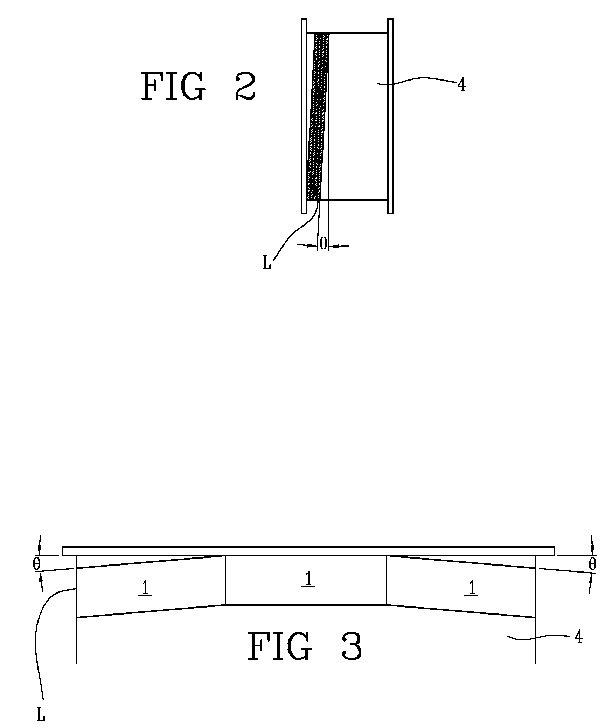

- Fig. 2 is a diagrammatic view of a portion of the storing device in accordance with the present invention;
- Fig. 3 is a diagrammatic view of a portion of elementary semifinished element deposited on the storing device, in accordance with the present invention.

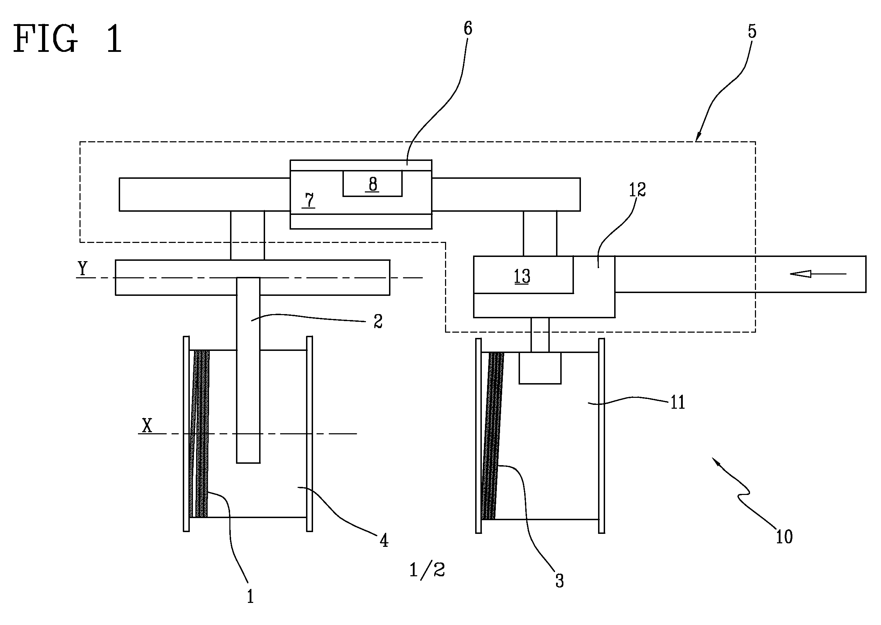

In Fig. 1, an embodiment given by way of example of an apparatus for deposition of an elementary semifinished element 1 on a collection support with interposition of a service film 3 has been generally identified with reference numeral 10.

This apparatus 10 is in particular used in a process for production of a tyre for vehicle wheels, in association with other apparatus. This process is in particular intended for formation of carcass plies, belt strips and some types of reinforcing elements, through mutual approaching of portions of an elementary semifinished element 1 on a substantially cylindrical and/or substantially toroidal deposition surface.

The elementary semifinished element 1 is obtained by a conventional extrusion process, preferably carried out upstream of apparatus 10, in line with the deposition carried out by apparatus 10.

Preferably said elementary semifinished element 1 has a transverse size (L) greater than or equal to about 15 mm.

Preferably, said elementary semifinished element 1 has a transverse size (L) smaller than or equal to about 60 mm.

Preferably, said elementary semifinished element 1 has a transverse size (L) included between about 15 mm and about 60 mm, extremes included.

Preferably, said elementary semifinished element 1 has a transverse size (L) included between about 25 mm and about 40 mm, extremes included.

The apparatus 10 comprises a deposition device 2, movable relative to said apparatus 10 and adapted to deposit the elementary semifinished element 1 on a collection support 4.

Preferably, the deposition device 2 comprises actuating devices enabling translation movements to be carried out on an axis "Y" parallel to axis "X" of said collection support 4, as well as rotation movements around said axis "Y".

The collection support 4 is movable relative to apparatus 10 and comprises a winding or unwinding core of nominal diameter (D) the value of which is preferably greater than or equal to about 600 mm.

Preferably, the value of the nominal diameter (D) is greater than or equal to about 1 m.

In a preferred embodiment, the rotation movement of the collection support 4 is operated by a suitable motor unit (not shown).

As diagrammatically shown in Fig. 1, provided upstream of apparatus 10 is a feed system 5 for supply of the elementary semifinished element 1, which system is adapted to bring said elementary semifinished element 1 from the extrusion devices (not shown) to apparatus 10, as well as to be interlocked with said deposition device 2.

The feed system 5 in a preferred embodiment comprises a speed compensating device 6 engaging a portion of said elementary semifinished element 1 and adapted to balance the speed of the portion of elementary semifinished element 1 coming out of the extrusion devices, with the deposition speed of the elementary semifinished element itself on the collection support 4.

In a preferred embodiment, said speed compensating device 6 comprises a plurality of idler rollers 7.

In a further preferred embodiment, a tension reducing device 8 is provided which is applied to the speed compensating device 6 and is adapted to impart a force in the feed direction of the elementary semifinished element 1 so as to enable reduction in the load acting on the elementary semifinished element 1.

Preferably, said tension reducing device 8 is placed close to one of the plurality of idler rollers 7.

In a further preferred embodiment said tension reducing device 8 comprises a motor unit 9, preferably having a constant torque.

Apparatus 10 further comprises a storage reel 11 for the service film 3, and a feeding device 12 adapted to bring said service film 3 from the storage reel 11 to the deposition device 2. Preferably, the service film 3 comprises polyethylene terephthalate or polyester.

In a preferred embodiment, the service film 3 is unwound from the storage reel 11 due to the pulling action exerted by the collection support 4, when the latter is set in rotation.

In a further embodiment, the service film 3 is unwound from the storage reel 11 by rotation of the reel 11 itself, carried out by a motor unit (not shown) applied to the storage reel 11.

Advantageous, the feeding device 12 is placed between the collection support 4 and the storage reel 11 and comprises a second series of idler rollers 13.

In a preferred embodiment, at a roller belonging to said second series of idler rollers 13, a motor unit (not shown) is active which is adapted to impart a force in the feed direction of the service film 3.

Operation of apparatus 10 is managed by a suitable control device (not shown) adapted to adjust the rotation speed of the collection support 4 and to determine a winding angle θ according to which the elementary semifinished element 1 associated with the service film 3 is deposited on the collection support 4.

This winding angle θ is calculated as a function of dimensional parameters characteristic of the collection support 4 and the elementary semifinished element 1.

In a preferred embodiment of the present invention, said winding angle θ is determined by the control device as a function of the transverse size (L) of the elementary semifinished element 1 and the value of the nominal diameter (D) of the collection support 4 according to the relation θ=arctg(L/πD).

Advantageously, said control device adjusts movement of the deposition device 2 as well as tension of the elementary semifinished element 1 and the service film 3, by acting on the responsible devices, such as said tension reducing device 8 and/or said motor unit acting on said second series of idler rollers 13.

The method for deposition of the elementary semifinished element 1 on the collection support 4 associated with the service film 3 is now described.

During preparation of apparatus 10, the collection support 4 under pre-load conditions and the storage reel 11 containing the service film 3 are placed in the suitable seats included in apparatus 10. The term "preload conditions" means an empty storage reel 11, i.e. without materials deposited thereon.

Subsequently, a limited portion of service film 3 is unwound from the storage reel 11 and wound on the outer surface of the winding core of the collection support 4.

Through the feed system 5, the end of the elementary semifinished element 1 is brought to the deposition device 2, which device 2 is subsequently positioned in the vicinity of the outer surface of the core of the collection support 4. In this manner, the end of the elementary semifinished element 1 is placed close to the portion of service film 3 previously deposited on said collection support 4, at an axially external starting position.

Following these operations, the collection support 4 is set in rotation and the elementary semifinished element 1 is wound on said support 2, together with the service film 3.

Preferably, said service film 3 is unwound from the storage reel 11 by the pulling action exerted by rotation of the collection support 4.

Preferably, deposition of said elementary semifinished element 1 joined to the service film 3 is carried out in the form of coils substantially disposed in side by side relationship at a deposition angle θ different from 0° and takes place until suitable sensors (not shown) generate a signal identifying reaching of a predetermined limit of the deposition surface. Said limit preferably comprises the free extremity of the deposition surface, measured in the axial direction relative to the collection support 4.

On occurrence of generation of said identification signal, the control system adjusts movement of the deposition device 2 in such a manner that the latter stops its transverse movement and goes on depositing the elementary semifinished element 1 at a winding angle θ substantially equal to 0°, for a circumferential angle ω smaller than 360°.

Preferably said circumferential angle ω has a value less than or equal to about 315°.

Said circumferential angle ω has a value greater than or equal to about 45°.

In a preferred embodiment of the present invention, said circumferential angle ω has a value included between about 45° and about 315°, extremes included.

After this winding for a circumferential angle ω less than 360°, the transverse movement of the deposition device 2 is restored in a way opposite to that followed in the previous step. The elementary semifinished element 1 is then deposited according to said angle θ different from 0°, in a spiralling direction substantially opposite to that adapted to form the previous layer.

A plurality of layers are then obtained going on repeating said actions: depositing the elementary semifinished element 1 to a predetermined winding angle θ different from 0°; stopping the transverse movement of the deposition device 2; carrying out deposition according to an angle θ substantially equal to 0° for a circumferential angle ω less than 360°; reverting the transverse movement of the deposition device 2 going on deposition to a winding angle θ different from 0° in a spiralling direction opposite to the previous one.

In a preferred embodiment this deposition process terminates when the maximum capacity of the collection support 2 is reached, depending on the sizes of the support itself.

Once the deposition process has been completed, feeding of the elementary semifinished element 1 and the service film to the collection support 4 is interrupted and said collection support 4 is removed from the provided seat and replaced with a new support 4 under pre-load conditions.

In a preferred embodiment of the present invention, the rotation speed of the collection support 4 can be advantageously determined by the control system, as a function of the geometric parameters and the physicochemical features of the elements concerned with the deposition process.

## Claims

1. A method for controlling the storing of an elementary semifinished element (1) in a plant for the differentiated production of tyres, said elementary semifinished element (1) being a continuous elongated element of elastomeric material internally having at least one textile or metallic reinforcing cord, said method comprising:
- providing at least one collection support (4) for the storing of elementary semifinished elements (1);
- forming a plurality of repeated units on said collection support (4), by deposition of said elementary semifinished element (1), associated with a service film (3), into coils substantially side-by-side, wherein each of said repeated units includes:
- at least two adjacent layers deposited in opposite spiralling directions, in a preset winding angle θ which is not 0°;
- at least two portions of winding obtained by depositing said elementary semifinished element (1) on said collection support (4) at a winding angle θ substantially equal to 0°, for a circumferential angle ω less than 360° and greater than or equal to about 45°, in the transition between two different directions of spiralling.

2. The method according to claim 1, wherein said winding angle θ is defined as a function of at least one dimensional parameter of said at least one collection support (4) and of said elementary semifinished element (1).

3. The method according to claim 2, wherein said at least one dimensional parameter of said at least one collection support (4) corresponds to the nominal diameter (D) of each support.

4. The method according to claim 2, wherein said at least one dimensional parameter of said elementary semifinished element (1) corresponds to one transverse dimension (L) of the elementary semifinished element (1).

5. The method according to claim 3, wherein said value of the nominal diameter (D) of the said at least one collection support (4) is greater than or equal to about 600 mm.

6. The method according to claim 3, wherein the value of said nominal diameter (D) of the said at least one collection support (4) is greater than or equal to about 1 m.

7. The method according to claim 4, wherein the value of the said transverse dimension (L) of the elementary semifinished element (1) is between about 15 mm and about 60 mm, extremes included.

8. The method according to claim 4, wherein the value of the said transverse dimension (L) of the elementary semifinished element (1) is between about 25 mm and about 40 mm, extremes included.

9. The method according to claim 1, wherein said circumferential angle (ω) has a value less than or equal to about 315°.

10. The method according to claim 1, also comprising:
- reducing the load acting on at least one portion of said elementary semifinished element (1) prior to said depositing of the elementary semifinished element (1).

11. The method according to claim 10, also comprising:
- providing at least one depositing device (2) for depositing said elementary semifinished element (1);
- providing at least one feed system (5) for said elementary semifinished element (1) designed to feed said at least one depositing device (2) in a defined feed direction, said feed system (5) comprising at least one speed compensating device (6) which engages at least one portion of said elementary semifinished element (1);
- inserting a tension reducing device (8) acting on said speed compensating device (6).

12. The method according to any one of the previous claims, wherein said service film (3) is taken from a storage reel (11) by rotation of said collection support (4).

13. The method according to any one of the previous claims, wherein said service film (3) comprises polyethylene terephthalate.

14. The method according to any one of the previous claims, comprising assembling at least one component of a tyre, wherein this component is obtained starting from said elementary semifinished element (1) unwound by at least one collection support (4).

15. A storing and feeding device for an elementary semifinished element (1) for use in a plant for the differentiated production of tyres, said elementary semifinished element (1) being a continuous elongated element of elastomeric material internally having at least one textile or metallic reinforcing cord, said device comprising, in load conditions:
- a collection support (4) for an elementary semifinished element (1);
- a plurality of repeated units obtained by depositing said elementary semifinished element (1), associated with a service film (3), into coils substantially side-by-side on said collection support (4), each of said repeated units including:
- at least two adjacent layers deposited in opposite spiralling directions, in a preset winding angle θ which is not 0°;
- at least two portions of winding obtained by depositing said elementary semifinished element (1) on said collection support (4) at a winding angle θ substantially equal to 0°, for a circumferential angle ω less than 360° and greater than or equal to about 45°.

16. The storing and feeding device according to claim 15, wherein said winding angle θ is defined as a function of at least one dimensional parameter of the storing device and of said elementary semifinished element (1).

17. The storing and feeding device according to claim 16, wherein said at least one dimensional parameter of said at least one collection support (4) corresponds to the nominal diameter (D) of said collection support (4).

18. The storing and feeding device according to claim 16, wherein said at least one dimensional parameter of said elementary semifinished element (1) corresponds to a transverse dimension (L) of the elementary semifinished element (1).

19. The storing and feeding device according to claim 17, wherein the value of said nominal diameter (D) of the said collection support (4) is greater than or equal to about 600 mm.

20. The storing and feeding device according to claim 17, wherein the value of said nominal diameter (D) of the said collection support (4) is greater than or equal to about 1 m.

21. The storing and feeding device according to claim 18, wherein the value of said transverse dimension (L) of the said elementary semifinished element (1) is between about 15 mm and about 60 mm, extremes included.

22. The storing and feeding device according to claim 18, wherein the value of said transverse dimension (L) of the said elementary semifinished element (1) is between about 25 mm and about 40 mm, extremes included.

23. The storing and feeding device according to claim 15, wherein said circumferential angle (ω) has a value between about 45° and about 315°, extremes included.

## Patentansprüche

1. Verfahren zur Steuerung des Speicherns eines halbfertigen Grundelements (1) in einer Anlage zur differenzierten Herstellung von Reifen, wobei das halbfertige Grundelement (1) ein durchgehendes längliches Element aus Elastomermaterial ist, das innen zumindest einen Verstärkungsdraht aus Gewebe oder Metall umfasst, wobei das Verfahren umfasst:
- Bereitstellen zumindest eines Aufnahmeträgers (4) zur Speicherung halbfertiger Grundelemente (1);
- Bilden einer Vielzahl von wiederholten Einheiten auf dem Aufnahmeträger (4), durch Ablegen des halbfertigen Grundelements (1) in Verbindung mit einer Arbeitsfolie (3) im Wesentlichen Seite an Seite in Wicklungen, wobei jede der wiederholten Einheiten umfasst:
- zumindest zwei benachbarte Lagen, die in gegenläufige Richtungen mit einem voreingestellten Wicklungswinkel θ, der nicht 0° ist, abgelegt sind;
- zumindest zwei Wicklungsabschnitte, die durch Ablegen des halbfertigen Grundelements (1) auf dem Aufnahmeträger (4) in einem Wicklungswinkel θ im Wesentlichen gleich 0° erhalten werden, für einen Umfangswinkel ω kleiner als 360° und größer oder gleich etwa 45°, in dem Übergang zwischen zwei verschiedenen Laufrichtungen.

2. Verfahren nach Anspruch 1, wobei der Wicklungswinkel θ als eine Funktion zumindest eines Dimensionsparameters des zumindest einen Aufnahmeträgers (4) und des halbfertigen Grundelements (1) definiert ist.

3. Verfahren nach Anspruch 2, wobei der zumindest eine Dimensionsparameter des zumindest einen Aufnahmeträgers (4) dem Nenndurchmesser (D) jedes Trägers entspricht.

4. Verfahren nach Anspruch 2, wobei der zumindest eine Dimensionsparameter des halbfertigen Grundelements (1) einer Querdimension (L) des halbfertigen Grundelements (1) entspricht.

5. Verfahren nach Anspruch 3, wobei der Wert des Nenndurchmessers (D) des zumindest einen Aufnahmeträgers (4) größer oder gleich etwa 600 mm ist.

6. Verfahren nach Anspruch 3, wobei der Wert des Nenndurchmessers (D) des zumindest einen Aufnahmeträgers (4) größer oder gleich etwa 1 m ist.

7. Verfahren nach Anspruch 4, wobei der Wert der Querdimension (L) des halbfertigen Grundelements (1) zwischen etwa 15 mm und etwa 60 mm (Extremwerte eingeschlossen) beträgt.

8. Verfahren nach Anspruch 4, wobei der Wert der Querdimension (L) des halbfertigen Grundelements (1) zwischen etwa 25 mm und etwa 40 mm (Extremwerte eingeschlossen) beträgt.

9. Verfahren nach Anspruch 1, wobei der Umfangswinkel (ω) einen Wert kleiner oder gleich etwa 315° hat.

10. Verfahren nach Anspruch 1, ebenfalls umfassend:
- Reduzieren der Last, die auf zumindest einen Abschnitt des halbfertigen Grundelements (1) wirkt, vor dem Ablegen des halbfertigen Grundelements (1).

11. Verfahren nach Anspruch 10, ebenfalls umfassend:
- Bereitstellen zumindest einer Ablagevorrichtung (2) zum Ablegen des halbfertigen Grundelements (1);
- Bereitstellen zumindest eines Vorschubsystems (5) für das halbfertige Grundelement (1), das dazu ausgebildet ist, die zumindest eine Ablagevorrichtung (2) in einer definierten Vorschubrichtung vorzuschieben, wobei das Vorschubsystem (5) zumindest eine Geschwindigkeitsausgleichsvorrichtung (6) umfasst, die mit zumindest einem Abschnitt des halbfertigen Grundelements (1) in Eingriff steht;
- Einsetzen einer Spannungsverringerungsvorrichtung (8), die auf die Geschwindigkeitsausgleichsvorrichtung (6) wirkt.

12. Verfahren nach einem der vorhergehenden Ansprüche, wobei die Arbeitsfolie (3) von einer Speicherrolle (11) durch Drehung des Aufnahmeträgers (4) abgenommen wird.

13. Verfahren nach einem der vorhergehenden Ansprüche, wobei die Arbeitsfolie (3) Polyethylenterephtalat umfasst.

14. Verfahren nach einem der vorhergehenden Ansprüche, umfassend das Zusammenbauen zumindest einer Komponente eines Reifens, wobei diese Komponente ausgehend von dem halbfertigen Grundelement (1) erhalten wird, das von dem zumindest einen Aufnahmeträger (4) abgewickelt wird.

15. Speicher- und Zuführvorrichtung für ein halbfertiges Grundelement (1) zur Verwendung in einer Anlage zur differenzierten Herstellung von Reifen, wobei das halbfertige Grundelement (1) ein durchgehendes längliches Element aus Elastomermaterial ist, das innen zumindest einen Verstärkungsdraht aus Gewebe oder Metall umfasst, wobei das Verfahren unter Lastbedingungen Folgendes umfasst:
- einen Aufnahmeträger (4) für ein halbfertiges Grundelement (1);
- eine Vielzahl von wiederholten Einheiten, die durch Ablegen des halbfertigen Grundelements (1) auf dem Aufnahmeträger (4) in Zuordnung mit einer Arbeitsfolie (3) im Wesentlichen Seite an Seite in Wicklungen erhalten wird, wobei jede der wiederholten Einheiten umfasst:
- zumindest zwei benachbarte Lagen, die in gegenläufige Richtungen mit einem voreingestellten Wicklungswinkel θ, der nicht 0° ist, abgelegt sind;
- zumindest zwei Wicklungsabschnitte, die durch Ablegen des halbfertigen Grundelements (1) auf dem Aufnahmeträger (4) in einem Wicklungswinkel θ im Wesentlichen gleich 0° erhalten werden, für einen Umfangswinkel ω kleiner als 360° und größer oder gleich etwa 45°.

16. Speicher- und Zuführvorrichtung nach Anspruch 15, wobei der Wicklungswinkel S als eine Funktion zumindest eines Dimensionsparameters des zumindest einen Aufnahmeträgers (4) und des halbfertigen Grundelements (1) definiert ist.

17. Speicher- und Zuführvorrichtung nach Anspruch 16, wobei der zumindest eine Dimensionsparameter des zumindest einen Aufnahmeträgers (4) dem Nenndurchmesser (D) des Aufnahmeträgers (4) entspricht.

18. Speicher- und Zuführvorrichtung nach Anspruch 16, wobei der zumindest eine Dimensionsparameter des halbfertigen Grundelements (1) einer Querdimension (L) des halbfertigen Grundelements (1) entspricht.

19. Speicher- und Zuführvorrichtung nach Anspruch 17, wobei der Wert des Nenndurchmessers (D) des Aufnahmeträgers (4) größer oder gleich etwa 600 mm ist.

20. Speicher- und Zuführvorrichtung nach Anspruch 17, wobei der Wert des Nenndurchmessers (D) des Aufnahmeträgers (4) größer oder gleich etwa 1 m ist.

21. Speicher- und Zuführvorrichtung nach Anspruch 18, wobei der Wert der Querdimension (L) des halbfertigen Grundelements (1) zwischen etwa 15 mm und etwa 60 mm (Extremwerte eingeschlossen) beträgt.

22. Speicher- und Zuführvorrichtung nach Anspruch 18, wobei der Wert der Querdimension (L) des halbfertigen Grundelements (1) zwischen etwa 25 mm und etwa 40 mm (Extremwerte eingeschlossen) beträgt.

23. Speicher- und Zuführvorrichtung nach Anspruch 15, wobei der Umfangswinkel (ω) einen Wert zwischen etwa 45° und etwa 315° (Extremwerte eingeschlossen) umfasst.

## Revendications

1. Procédé pour commander le stockage d'un élément semi-fini élémentaire (1) dans une installation pour la production différenciée de pneus, ledit élément semi-fini élémentaire (1) étant un élément allongé continu en matériau élastomère ayant à l'intérieur au moins un câble de renfort textile ou métallique, ledit procédé comprenant le fait :
- de fournir au moins un support de collecte (4) pour le stockage d'éléments semi-finis élémentaires (1) ;
- de former une pluralité d'unités répétées sur ledit support de collecte (4), par dépôt dudit élément semi-fini élémentaire (1), associé à un film de service (3), en rouleaux sensiblement côte à côte, où chacune desdites unités répétées comporte :
- au moins deux couches adjacentes déposées dans des directions de spiralisation opposées, selon un angle d'enroulement θ prédéfini qui n'est pas égal à 0° ;
- au moins deux parties d'enroulement obtenues en déposant ledit élément semi-fini élémentaire (1) sur ledit support de collecte (4) selon un angle d'enroulement θ sensiblement égal à 0°, pour un angle inscrit ω inférieur à 360° et supérieur ou égal à environ 45°, dans la transition entre deux directions de spiralisation différentes.

2. Procédé selon la revendication 1, dans lequel ledit angle d'enroulement θ est défini en tant que fonction d'au moins un paramètre de dimension dudit au moins un support de collecte (4) et dudit élément semi-fini élémentaire (1).

3. Procédé selon la revendication 2, dans lequel ledit au moins un paramètre de dimension dudit au moins un support de collecte (4) correspond au diamètre nominal (D) de chaque support.

4. Procédé selon la revendication 2, dans lequel ledit au moins un paramètre de dimension dudit élément semi-fini élémentaire (1) correspond à une dimension transversale (L) de l'élément semi-fini élémentaire (1).

5. Procédé selon la revendication 3, dans lequel ladite valeur du diamètre nominal (D) dudit au moins un support de collecte (4) est supérieure ou égale à environ 600 mm.

6. Procédé selon la revendication 3, dans lequel la valeur dudit diamètre nominal (D) dudit au moins un support de collecte (4) est supérieure ou égale à environ 1 m.

7. Procédé selon la revendication 4, dans lequel la valeur de ladite dimension transversale (L) de l'élément semi-fini élémentaire (1) est comprise entre environ 15 mm et environ 60 mm, bornes incluses.

8. Procédé selon la revendication 4, dans lequel la valeur de ladite dimension transversale (L) de l'élément semi-fini élémentaire (1) est comprise entre environ 25 mm et environ 40 mm, bornes incluses.

9. Procédé selon la revendication 1, dans lequel ledit angle inscrit (ω) a une valeur inférieure ou égale à environ 315°.

10. Procédé selon la revendication 1, comprenant aussi le fait :
- de réduire la charge agissant sur au moins une partie dudit élément semi-fini élémentaire (1) avant ledit dépôt de l'élément semi-fini élémentaire (1).

11. Procédé selon la revendication 10, comprenant aussi le fait :
- de fournir au moins un dispositif de dépôt (2) pour déposer ledit élément semi-fini élémentaire (1) ;
- de fournir au moins un système d'alimentation (5) pour ledit élément semi-fini élémentaire (1) conçu pour alimenter ledit au moins un dispositif de dépôt (2) dans une direction d'alimentation définie, ledit système d'alimentation (5) comprenant au moins un dispositif de compensation de vitesse (6) qui vient en prise avec au moins une partie dudit élément semi-fini élémentaire (1) ;
- d'insérer un dispositif de réduction de tension (8) agissant sur ledit dispositif de compensation de vitesse (6).

12. Procédé selon l'une quelconque des revendications précédentes, dans lequel ledit film de service (3) est tiré d'une bobine de stockage (11) par rotation dudit support de collecte (4).

13. Procédé selon l'une quelconque des revendications précédentes, dans lequel ledit film de service (3) comprend du polyéthylène téréphtalate.

14. Procédé selon l'une quelconque des revendications précédentes, comprenant le fait d'assembler au moins un composant d'un pneu, dans lequel ce composant est obtenu à partir dudit élément semi-fini élémentaire (1) déroulé par au moins un support de collecte (4).

15. Dispositif de stockage et d'alimentation pour un élément semi-fini élémentaire (1) destiné à une utilisation dans une installation de production différenciée de pneus, ledit élément semi-fini élémentaire (1) étant un élément allongé continu en matériau élastomère ayant à l'intérieur au moins un câble de renfort textile ou métallique, ledit dispositif comprenant, dans des conditions de charge :
- un support de collecte (4) pour un élément semi-fini élémentaire (1) ;
- une pluralité d'unités répétées obtenues en déposant ledit élément semi-fini élémentaire (1), associé à un film de service (3), en rouleaux sensiblement côte à côte sur ledit support de collecte (4), chacune desdites unités répétées comportant :
- au moins deux couches adjacentes déposées dans des directions de spiralisation opposées, selon un angle d'enroulement θ prédéfini qui n'est pas égal à 0° ;
- au moins deux parties d'enroulement obtenues en déposant ledit élément semi-fini élémentaire (1) sur ledit support de collecte (4) selon un angle d'enroulement θ sensiblement égal à 0°, pour un angle inscrit ω inférieur à 360° et supérieur ou égal à environ 45°.

16. Dispositif de stockage et d'alimentation selon la revendication 15, dans lequel ledit angle d'enroulement θ est défini en tant que fonction d'au moins un paramètre de dimension du dispositif de stockage et dudit élément semi-fini élémentaire (1).

17. Dispositif de stockage et d'alimentation selon la revendication 16, dans lequel ledit au moins un paramètre de dimension dudit au moins un support de collecte (4) correspond au diamètre nominal (D) dudit support de collecte (4).

18. Dispositif de stockage et d'alimentation selon la revendication 16, dans lequel ledit au moins un paramètre de dimension dudit élément semi-fini élémentaire (1) correspond à une dimension transversale (L) de l'élément semi-fini élémentaire (1).

19. Dispositif de stockage et d'alimentation selon la revendication 17, dans lequel la valeur dudit diamètre nominal (D) dudit support de collecte (4) est supérieure ou égale à environ 600 mm.

20. Dispositif de stockage et d'alimentation selon la revendication 17, dans lequel la valeur dudit diamètre nominal (D) dudit support de collecte (4) est supérieure ou égale à environ 1 m.

21. Dispositif de stockage et d'alimentation selon la revendication 18, dans lequel la valeur de ladite dimension transversale (L) dudit élément semi-fini élémentaire (1) est comprise entre environ 15 mm et environ 60 mm, bornes incluses.

22. Dispositif de stockage et d'alimentation selon la revendication 18, dans lequel la valeur de ladite dimension transversale (L) dudit élément semi-fini élémentaire (1) est comprise entre environ 25 mm et environ 40 mm, bornes incluses.

23. Dispositif de stockage et d'alimentation selon la revendication 15, dans lequel ledit angle inscrit (ω) a une valeur comprise entre environ 45° et environ 315°, bornes incluses.
